Europäisches Patentamt

European Patent Office

Office européen des brevets

(19)

(11) Veröffentlichungsnummer: **0 086 872**
**B1**

(12) # EUROPÄISCHE PATENTSCHRIFT

(45) Veröffentlichungstag der Patentschrift:
03.02.88

(21) Anmeldenummer: 82109125.3

(22) Anmeldetag: 02.10.82

(51) Int. Cl.⁴: **H 04 J 9/00,** H 04 B 1/00,
H 04 B 1/62

(54) **Verfahren und Vorrichtung zur Übertragung von durch Frequenzumtastung im Hörbereich kodierten Signalen.**

(30) Priorität: 20.02.82 DE 3206132

(43) Veröffentlichungstag der Anmeldung:
31.08.83 Patentblatt 83/35

(45) Bekanntmachung des Hinweises auf die Patenterteilung:
03.02.88 Patentblatt 88/5

(84) Benannte Vertragsstaaten:
AT BE DE FR GB IT NL

(56) Entgegenhaltungen:
GB-A-1 170 432
GB-A-1 230 217
US-A-4 053 834

INTERNATIONAL CONFERENCE ON
COMMUNICATIONS, Denver, Colorado, 14.-18.
Juni 1981, Conference Record, Band 2, Seiten 23.1.1
- 23.1.4, New York, USA P. CONSTANTINOU et al.:
"Digital transmission over conventional mobile
channels maximum bit rate"
FUNKSCHAU, Band 52, Nr. 17, 14. August 1980,
Seiten 67-71, München, DE B. WIEDENROTH: "High-
Com-Überblick und Entwicklungsstand"

(73) Patentinhaber: ROBERT BOSCH GMBH, Postfach
50, D-7000 Stuttgart 1 (DE)

(72) Erfinder: Gorzel, Heribert, Dipl. Ing., Forstweg 33
c, D-1000 Berlin 28 (DE)

(74) Vertreter: Schmidt, Hans- Ekhardt, Robert Bosch
GmbH Geschäftsbereich Elektronik Patent- und
Lizenzabteilung Forckenbeckstrasse 9-13, D-1000
Berlin 33 (DE)

EP 0 086 872 B1

## Beschreibung

### Stand der Technik

Die Erfindung geht von einem Verfahren nach dem Oberbegriff des Anspruchs 1 sowie einer Vorrichtung nach dem Oberbegriff des unabhängigen Anspruchs 2 aus.

Ein heute übliches Verfahren zur Funkübertragung von Sprache ist neben der frequenzmodulierten Übertragung (FM) die phasenmodulierte Übertragung (PM). Die PM-Übertragung hat gegenüber der FM-Übertragung ein günstigeres Signal/ Rausch-Verhältnis. Sollen jedoch mit PM-Funkgeräten kodierte Signale (Audio Frequency Shift Keying-AFSK-Signale) durch Frequenzumtastung im Hörbereich übertragen werden, wie dies aus der DE-A-2 901 798 und der DE-A-3 005 612 bekannt ist und auch beispielsweise durch die handelsüblichen Funkgeräte KF 161 bis 163 (Robert Bosch GmbH) realisiert ist, so macht sich die NF-Übertragungscharakteristik eines PM-Senders ungünstig bemerkbar. Dieser hebt nämlich die höheren Frequenzen um 6 dB/Oktave an, so daß eine Absenkung des Signalpegels vorgenommen werden muß, weil sonst der zulässige maximale Spitzenhub überschritten und das Modulationssignal verzerrt wird. Dadurch verschlechtert sich der Störabstand (Signal/Rausch-Verhältnis) der AFSK-Übertragung mit PM-Funkgeräten gegenüber FM-Funkgeräten.

Es ist ferner ein Übertragungsverfahren mit PM-Sender und PM-Empfänger bekannt (GB-A-1 170 432). Bei dem bekannten Verfahren werden jedoch offensichtlich keine durch AFSK erhaltenen Signale übertragen, sondern es geht vielmehr um eine veränderbare Emphasis und eine Dynamikregelung, wobei senderseitig nur eine Preemphasis vorgesehen ist.

### Aufgabe der Erfindung

Der vorliegenden Erfindung liegt die Aufgabe zugrunde, bei der Übertragung von AFSK-Signalen von einem PM-Sender zu einem PM-Empfänger die störende NF-Übertragungscharakteristik des PM-Senders automatisch zu kompensieren.

### Vorteile der Erfindung

Das erfindungsgemäße Verfahren mit den kennzeichnenden Merkmalen des Anspruchs 1 hat demgegenüber den Vorteil, daß diese ungünstige NF-Übertragungscharakteristik des PM-Senders/Empfängers kompensiert wird, so daß über den ganzen Bereich mit dem maximal zulässigen Spitzenhub gesendet werden kann.

Durch die im Anspruch 3 aufgeführten Merkmale ist eine vorteilhafte Weiterbildung und Verbesserung der im Anspruch 2 angegebenen Vorrichtung möglich.

Besonders vorteilhaft ist es, das zu übertragende AFSK-Signal vor der Zuführung in den PM-Sender mit einer entsprechenden gegenläufigen Charakteristik zu bewerten und am Ausgang des Empfängers dieses AFSK-Signal wieder abzugreifen und rückzubewerten. Dadurch können handelsübliche PM-Sender/Empfänger ohne Eingriffe in die Geräte selbst für die AFSK-Übertragung verwendet werden. An die entsprechenden Eingangs- und Ausgangsbuchsen müssen lediglich Zusatzgeräte angeschlossen werden. So können im gleichen Gerät neben der Sprechfunkübertragung in vorteilhafter Weise AFSK-Signale übertragen werden.

Diese Zusatzgeräte sind vorteilhaft Deemphasis-Stufen bzw. Preemphasis-Stufen, die dem Eingang des PM-Senders vorgeschaltet bzw. dem Ausgang des PM-Empfängers nachgeschaltet werden.

### Zeichnung

Ein Ausführungsbeispiel der Erfindung ist in der Zeichnung dargestellt und in der nachfolgenden Beschreibung näher erläutert.
Es zeigen
Fig. 1 ein Ausführungsbeispiel der Erfindung im Blockschaltbild,
Fig. 2 die Abhängigkeit des Frequenzhubes von der Modulationsfrequenz zur Erläuterung der Wirkungsweise der Übertragungsfunktion eines PM-Senders und
Fig. 3 die Abhängigkeit des Frequenzhubes von der Modulationsfrequenz zur Erläuterung der Wirkungsweise der Kompensation.

### Beschreibung des Ausführungsbeispiels

Einem PM-Sender 10 werden die Signale eines Mikrofons 11 eingangsseitig zugeführt. Diese werden in einem NF-Vorverstärker 12 verstärkt und über ein Bewertungsnetzwerk 13 (Preemphasis, zum Beispiel +6 dB/Oktave) einem Frequenzmodulator 14 (FM-Modulator) zugeführt. Dessen Ausgangssignale werden einem UHF-Sender 15 zugeleitet, von dem aus sie als Funksignale zu einem PM-Empfänger (16) gelangen. Dort werden sie über ein UHF-Empfangsteil 17 einer Zwischenfrequenzstufe 18 (ZF-Teil) zugeführt, von wo aus sie dann zu einem FM-Demodulator 19 gelangen. Anschließend werden diese Signale dann über ein Bewertungsnetzwerk 20 (Deemphasis, zum Beispiel -6 dB/Oktave) einem NF-Verstärker 21 zugeführt, der sie über einen Lautsprecher 22 hörbar macht. Der eingangs als Stand der Technik angeführte und im Handel erhältliche PM-Sender und PM-Empfänger sind entsprechend aufgebaut.

Dem Eingang des PM-Senders 10 ist nunmehr ein weiteres Bewertungsnetzwerk 23 vorgeschaltet, dem die AFSK-Signale zugeführt werden. Diese durch Frequenzumtastung im Hörbereich erzeugten Signale arbeiten beispielsweise mit den Frequenzen 1200 und 1800 Hz. Dieses Bewertungsnetzwerk 23 ist mit einer entgegengesetzten Charakteristik gegenüber dem Bewertungsnetzwerk 13 aufgebaut und ist daher gemäß dem beschriebenen PM-Sender 10 als Deemphasis-Stufe mit -6 dB/Oktave realisiert. Entsprechend ist der Ausgang des PM-Empfängers 16 mit einer weiteren Bewertungsstufe 24 verbunden, die entsprechend als Preemphasis-Stufe mit +6 dB/Oktave realisiert ist. Die ausgangsseitig erzeugten AFSK-Signale werden in nicht näher dargestellter Weise dann einem AFSK-Demodulator und anschließend beispielsweise einem Drucker zugeführt, wie dies im eingangs angegebenen Stand der Technik näher beschrieben ist.

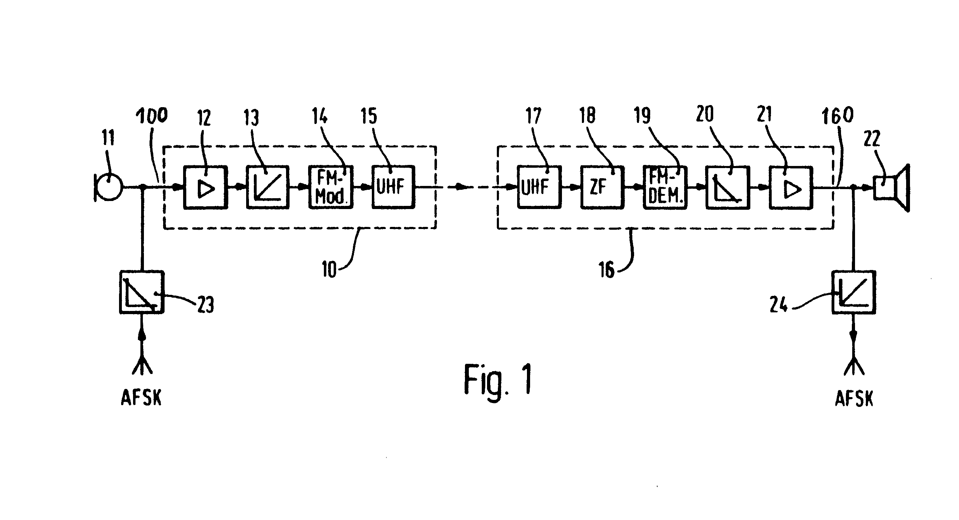

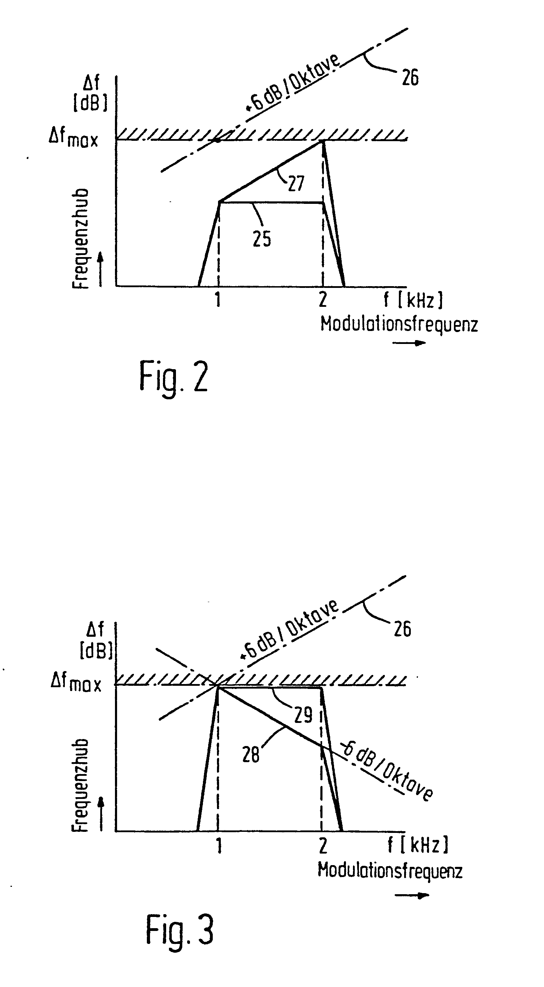

Die Wirkungsweise des in Fig. 1 dargestellten Ausführungsbeispiels soll im folgenden anhand der in den Fig. 2 und 3 dargestellten Schemata erläutert werden. Eine erste-Kurve 25 in Fig. 2 zeigt das Ursprungsspektrum der AFSK-Quelle. Die strichpunktierte Kurve 26 zeigt die NF-Übertragungscharakteristik eines PM-Senders. Durch diese Übertragungscharakteristik werden die höheren Töne um 6 dB/Oktave angehoben. Die Kurve 27 zeigt das AFSK-Spektrum nach der Bewertung durch die PM-Charakteristik des Senders 10. Da der maximal zulässige Spitzenhub $\Delta f_{max}$, der zum Beispiel gesetzlich vorgeschrieben sein kann, nicht überschritten werden darf, stellt die Kurve 27 die maximale Übertragungsmöglichkeit bezüglich eines optimalen Störabstandes dar, wenn zunächst die Stufen 23, 24 unberücksichtigt bleiben.

Da gemäß dem Ausführungsbeispiel jedoch die AFSK-Signale zunächst der Deemphasis-Stufe 23 zugeführt werden, die eine Bewertungscharakteristik von -6 dB/Oktave aufweist, wird das AFSK-Spektrum zunächst gemäß der Kurve 28 in Fig. 3 bewertet. Durch die PM-Charakteristik des Senders (+6 dB/Oktave) wird nun die Kurve 28 auf das Niveau der Kurve 29 angehoben. Dies stellt eine optimale Übertragung dar, da über das ganze Frequenzband mit dem maximal zulässigen Spitzenhub gearbeitet wird.

Im Empfänger 16 laufen dann natürlich die umgekehrten Vorgänge ab, das heißt, im Bewertungsnetzwerk 20 wird aus dem Spektrum 29 wieder das Spektrum 28 und im Bewertungsnetzwerk 24 daraus wieder das Spektrum 25, das dem ursprünglich eingegebenen AFSK-Spektrum entspricht. Damit ist eine lineare Übertragung dieses Signals bei maximal möglichem Spitzenhub erreicht. Der Störabstand ist gegenüber handelsüblichen Funkgeräten um 4,4 dB verbessert worden.

Es sei noch erwähnt, daß das vorgeschlagene Verfahren auch zur Reichweite-Verbesserung des 5-Ton-Folgeverfahrens oder ähnlicher Verfahren geeignet ist.

**Patentansprüche**

1. Verfahren zur Übertragung von durch Frequenzumtastung im Hörbereich kodierten Signalen (AFSK-Signalen) mittels eines Phasenmodulationssenders (PM-Senders) und eines Phasenmodulationsempfängers (PM-Empfängers), dadurch gekennzeichnet, daß das zu übertragende AFSK-Signal vor der Zuführung zu dem PM-Sender (10) mit einer der NF-Übertragungscharakteristik des PM-Senders/Empfängers entgegengesetzt verlaufenden Charakteristik bewertet, mit maximalem Frequenzhub übertragen und vom Ausgang des PM-Empfängers (16) abgeleitet und rückbewertet wird.

2. Vorrichtung zum Übertragen von durch Frequenzumtastung im Hörbereich kodierten Signalen (AFKS-Signalen) mit einem PM-Sender und einem PM-Empfänger zur Durchführung des Verfahrens nach Anspruch 1, dadurch gekennzeichnet, daß dem Eingang des PM-Senders (10) eine Deemphasis-Stufe (23) vorgeschaltet und dem PM-Empfänger (16) eine Preemphasis-Stufe (24) nachgeschaltet ist.

3. Vorrichtung nach Anspruch 2, dadurch gekennzeichnet, daß die Übertragungscharakteristik der beiden Stufen (23, 24) von -x dB/Oktave bzw. +x dB/Oktave jeweils entgegengesetzt zur Übertragungscharakteristik des PM-Senders (10) von +x dB/Oktave und des PM-Empfängers (16) von -x dB/Oktave ist.

**Claims**

1. A method of transmitting coded signals (AFSK signals) in the audible range by frequency-shift keying by means of a phase modulation transmitter (PM transmitter) and a phase modulation receiver (PM receiver), characterised in that, before being fed to the PM transmitter (10), the AFSK signal to be transmitted is weighted with a characteristic which runs opposite to the low-frequency transmission characteristic of the PM transmitter/ receiver, transmitted with maximum frequency deviation and derived from the output of the PM receiver (16) and reverse-weighted.

2. A device for transmitting coded signals (AFSK signals) in the audible range by frequency-shift keying with a PM transmitter and a PM receiver for carrying out the method according to Claim 1, characterised in that a de-emphasis stage (23) is connected upstream of the input of the PM transmitter (10) and a pre-emphasis stage (24) is connected downstream of the PM receiver (16).

3. A device as claimed in Claim 2, characterised in that the transmission characteristics of the two stages (23, 24) of -x dB/octave and +x dB/octave are opposed to the transmission characteristic of the PM transmitter (10) of +x dB/octave and that of the PM receiver (16) of -x dB/octave respectively.

**Revendications**

1. Procédé de transmission par conversion de fréquence de signaux codés dans le domaine audible (signaux AFSK) par l'intermédiaire d'un émetteur à modulation de phase (émetteur MP) et d'un récepteur à modulation de phase (récepteur MP), caractérisé en ce qu'avant d'être appliqué à l'émetteur MP (10), le signal AFSK est traité avec une caractéristique à tracé opposée à la caractéristique de transmission BF de l'émetteur/récepteur MP, pour être transmis avec une excursion maximale de la fréquence, et être fourni par la sortie du récepteur MP (16) pour être restitué.

2. Dispositif pour la transmission de signaux codés dans le domaine audible avec conversion de fréquence (signaux AFSK) comportant un émetteur MP et un récepteur MP pour la mise en oeuvre du procédé selon la revendication 1, caractérisé en ce que l'entrée de l'émetteur MP (10) est précédée par un étage de désaccentuation (23) et le récepteur MP (16) est suivi par un étage de pré-accentuation (24).

3. Dispositif selon la revendication 2, caractérisé en ce que la caractéristique de transmission des deux étages (23, 24) est opposée à -x dB/Octave ou +x dB/Octave respectivement à la caractéristique de transmission de l'émetteur MP (10) de +x dB/Octave et du récepteur MP (16) de -x dB/octave.

Fig. 1

0 086 872

Fig. 2

Fig. 3